# EUROPEAN PATENT APPLICATION

(11) **EP 4 811 455 A1**
(43) Date of publication of application: **23.09.2026**
(21) Application number: 26160634.7
(22) Date of filing: 25.02.2026
(51) Int. Cl.: H01M 4/525, H01M 4/505, H01M 4/131, H01M 10/0525, H01M 4/02

(54) **POSITIVE ELECTRODE ACTIVE MATERIAL, POSITIVE ELECTRODE, AND SECONDARY BATTERY**

(30) Priority: 17.03.2025 JP 2025042175
(71) Applicant: Prime Planet Energy & Solutions, Inc., Chuo-ku, Tokyo 103-0022 (JP)
(72) Inventor: SAITO, Masaya, Tokyo,, 103-0022 (JP)
(74) Representative: Kuhnen & Wacker Patent- und Rechtsanwaltsbüro PartG mbB

(57) **Abstract**

A positive electrode active material that can make the moisture absorption of a positive electrode small in the storage and that enables a secondary battery to have high volumetric energy density is provided. The positive electrode active material according to the present disclosure includes first lithium composite oxide particles in a single particle form, and second lithium composite oxide particles in a secondary particle form. In a volume-based particle size distribution obtained in accordance with a laser diffraction/scattering method, when the particle diameter at which the cumulative frequency becomes 10% is defined as 10% particle diameter (D10), the particle diameter at which the cumulative frequency becomes 50% is defined as 50% particle diameter (D50), and the particle diameter at which the cumulative frequency becomes 90% is defined as 90% particle diameter (D90), the 50% particle diameter (D50) of the first lithium composite oxide particles is smaller than the 50% particle diameter (D50) of the second lithium composite oxide particles and a particle size distribution width expressed by (D90 - D10)/D50 of the first lithium composite oxide particles is 1.20 or less. The particle breaking strength of the second lithium composite oxide particles is 200 MPa or less.

## Description

### BACKGROUND OF THE DISCLOSURE

### 1. Field

The present disclosure relates to a positive electrode active material. The present disclosure also relates to a positive electrode including the positive electrode active material. The present disclosure additionally relates to a secondary battery including the positive electrode.

### 2. Background

In recent years, secondary batteries such as lithium ion secondary batteries have been suitably used for portable power sources of personal computers, mobile terminals, and the like, driving power sources of vehicles such as a battery electric vehicle (BEV), a hybrid electric vehicle (HEV), and a plug-in hybrid vehicle (PHEV), and the like.

The secondary batteries have been required to have further higher performance along with the spread thereof. In a positive electrode of a lithium ion secondary battery, a lithium composite oxide is generally used as a positive electrode active material. A technique of mixing two kinds of lithium composite oxides with different characteristics as particles for the purpose of improving the performance of the lithium ion secondary battery has been known (for example, see Patent Documents 1 to 3). In Patent Documents 1 to 3 , a lithium composite oxide in a single particle form and a lithium composite oxide in an aggregated particle (in other words, secondary particle) form are used.

### [Citation List]

### [Patent Document]

[Patent Document 1] WO2021/065162
[Patent Document 2] Japanese Patent Application Publication No. 2019-160571
[Patent Document 3] Japanese Patent Application Publication No. 2024-060967

### SUMMARY

One performance of the secondary battery whose improvement is demanded is volumetric energy density. One of the methods to improve the volumetric energy density is to increase the density of a positive electrode active material layer including a positive electrode active material. As a result of the present inventors' earnest examinations regarding this, it has been found out that, when the lithium composite oxide in the single particle form and the lithium composite oxide in the secondary particle form are used in combination as the positive electrode active material and the positive electrode active material layer is pressed at higher pressure than before in order to increase the density further, many secondary particles are cracked and the positive electrode absorbs much moisture in the storage. When the moisture absorption of the positive electrode is large in the storage, the performance of the secondary battery may be adversely affected.

In view of the above, it is an object of the present disclosure to provide a positive electrode active material that can make the moisture absorption of a positive electrode small in the storage and that enables a secondary battery to have high volumetric energy density.

A positive electrode active material according to the present disclosure includes first lithium composite oxide particles in a single particle form, and second lithium composite oxide particles in a secondary particle form. In a volume-based particle size distribution obtained in accordance with a laser diffraction/scattering method, when a particle diameter at which a cumulative frequency becomes 10% is defined as 10% particle diameter (D10), a particle diameter at which the cumulative frequency becomes 50% is defined as 50% particle diameter (D50), and a particle diameter at which the cumulative frequency becomes 90% is defined as 90% particle diameter (D90), the 50% particle diameter (D50) of the first lithium composite oxide particles is smaller than the 50% particle diameter (D50) of the second lithium composite oxide particles. A particle size distribution width expressed by (D90 - D10)/D50 of the first lithium composite oxide particles is 1.20 or less. A particle breaking strength of the second lithium composite oxide particles is 200 MPa or less.

Such a structure can provide the positive electrode active material that can make the moisture absorption of the positive electrode small in the storage and that enables a secondary battery to have high volumetric energy density.

In another aspect, a positive electrode according to the present disclosure includes a positive electrode current collector, and a positive electrode active material layer supported on the positive electrode current collector. The positive electrode active material layer includes the positive electrode active material described above. Such a structure can suppress the moisture absorption of the positive electrode in the storage and enables the secondary battery to have high volumetric energy density.

In still another aspect, a secondary battery according to the present disclosure includes a positive electrode, a negative electrode, and an electrolyte. The positive electrode is the positive electrode described above. Such a structure can suppress the moisture absorption in the storage after the positive electrode to be used is manufactured, and enables the secondary battery to have high volumetric energy density.

### BRIEF DESCRIPTION OF THE DRAWINGS

FIG. 1 is a schematic view of single particles;
FIG. 2 is a schematic view of a secondary particle;
FIG. 3 is a cross-sectional view schematically illustrating a positive electrode according to one embodiment of the present disclosure;
FIG. 4 is a cross-sectional view schematically illustrating an internal structure of a lithium ion secondary battery according to one embodiment of the present disclosure; and
FIG. 5 is a schematic exploded view illustrating a structure of a wound electrode body of the lithium ion secondary battery according to one embodiment of the present disclosure.

### DETAILED DESCRIPTION OF THE EMBODIMENTS

Embodiments of the present disclosure will hereinafter be described with reference to the drawings. Matters that are not mentioned in the present specification and that are necessary for the implementation of the present disclosure can be grasped as design matters of those skilled in the art based on the prior art in the relevant field. The present disclosure can be implemented on the basis of the contents disclosed in the present specification and common technical knowledge in the relevant field. It should be noted that in the drawings below, the members and parts with the same operation are explained by being denoted by the same reference sign. In addition, the size relation (length, width, thickness, etc.) in each drawing does not necessarily reflect the actual size relation. Moreover, in the present specification, the numerical range expressed as "A to B" includes A and B.

It should be noted that the term "secondary battery" in this specification refers to an electrical energy storage device capable of being charged and discharged repeatedly. It should be noted that, in the present specification, the term "lithium ion secondary battery" refers to a secondary battery that uses lithium ions as a charge carrier and can be charged and discharged by transfer of charges accompanying with the lithium ions between positive and negative electrodes.

A positive electrode active material according to the present disclosure includes first lithium composite oxide particles in a single particle form and second lithium composite oxide particles in a secondary particle form.

Crystal structures of lithium composite oxides constituting the first lithium composite oxide particles and the second lithium composite oxide particles are not limited in particular and may be a layered structure, a spinel structure, or the like.

As the lithium composite oxide, a lithium transition metal composite oxide is desirable, and a lithium transition metal composite oxide containing at least one kind among Ni, Co, and Mn as a transition metal element is more desirable. Specific examples thereof include lithium nickel composite oxides, lithium cobalt composite oxides, lithium manganese composite oxides, lithium nickel manganese composite oxides, lithium nickel cobalt manganese composite oxides, lithium nickel cobalt aluminum composite oxides, lithium iron nickel manganese composite oxides, and the like.

It should be noted that the "lithium nickel cobalt manganese composite oxide" herein includes not only oxides including Li, Ni, Co, Mn, and O as constituent elements, but also an oxide further including one or more additive elements besides them. Examples of the additive elements include transition metal elements and typical metal elements such as Mg, Ca, Al, Ti, V, Cr, Y, Zr, Nb, Mo, Hf, Ta, W, Na, Fe, Zn, and Sn. The additive element may be a metalloid element such as B, C, Si, or P, and a nonmetal element such as S, F, Cl, Br, or I. This also applies, in the same manner, to the lithium nickel composite oxide, the lithium cobalt composite oxide, the lithium manganese composite oxide, the lithium nickel manganese composite oxide, the lithium nickel cobalt aluminum composite oxide, and the lithium iron nickel manganese composite oxide described above.

The lithium composite oxide is more desirably a lithium composite oxide containing nickel (Ni) and having a layered crystal structure (that is, Ni-containing lithium composite oxide with the layered structure). It should be noted that whether the lithium composite oxide has the layered crystal structure can be checked in accordance with a known method (for example, X-ray diffraction method or the like).

Among the Ni-containing lithium composite oxides with the layered structure, a lithium nickel cobalt manganese composite oxide is desirable because of having excellent characteristics such as low initial resistance. From the viewpoint of the high volumetric energy density of a nonaqueous electrolyte secondary battery, the content of nickel relative to the total metal elements other than lithium in the lithium nickel cobalt manganese composite oxide is desirably 50 mol% or more and more desirably 55 mol% or more. On the other hand, from the viewpoint of high stability, the content of nickel relative to the total metal elements other than lithium is desirably 88 mol% or less and more desirably 85 mol% or less.

As the lithium nickel cobalt manganese composite oxide, specifically, the lithium nickel cobalt manganese composite oxide having a composition represented by the following Formula (I) is desirable:

Li₁₊ₓNi_{y}Co_{z}Mn_{(1-y-z)}M_{α}O_{2-β}Q_{β} (I)

In the above Formula (I), x, y, z, α, and β satisfy -0.3 ≤ x ≤ 0.3, 0.1 < y < 0.9, 0 < z < 0.5, 0 ≤ α ≤ 0.1, and 0 ≤ β ≤ 0.5, respectively. M represents at least one kind of element selected from the group consisting of Zr, Mo, W, Mg, Ca, Na, Fe, Cr, Zn, Sn, B, and Al. Q represents at least one kind of element selected from the group consisting of F, Cl, and Br.

From the viewpoint of the high energy density of the nonaqueous electrolyte secondary battery, y and z satisfy desirably 0.50 ≤ y ≤ 0.88 and 0.10 ≤ z ≤ 0.45 and more desirably 0.55 ≤ y ≤ 0.85 and 0.10 ≤ z ≤ 0.40, respectively.

The compositions of the first lithium composite oxide particle and the second lithium composite oxide particle may be either the same or different. The first lithium composite oxide particle and the second lithium composite oxide particle are desirably the particles of the lithium nickel cobalt manganese composite oxide because of having excellent characteristics such as low initial resistance.

The first lithium composite oxide particles are in the single particle form. It should be noted that, in the present specification, the term "single particle" refers to a particle generated by the growth of a single crystal nucleus, and therefore indicates a particle of a single-crystal body without a crystal grain boundary. Whether the particle is the single-crystal body can be checked by analyzing an electron beam diffraction image with a transmission electron microscope (TEM), for example.

The single particle has a property that the aggregation is difficult and the single particle forms the lithium composite oxide particle alone; however, the single particles may be aggregated to each other to form the lithium composite oxide particle. However, in the case where the single particles are aggregated to each other to form the lithium composite oxide particle, the number of the aggregated single particles is two or more and ten or less. Therefore, one lithium composite oxide particle is formed of one or more and ten or less single particles, and the lithium composite oxide particle can be formed of one or more and five or less single particles, one or more and three or less single particles, or one single particle. It should be noted that the number of single particles in one lithium composite oxide particle can be checked by observation using a scanning electron microscope (SEM) at a magnification of 10,000 to 30,000.

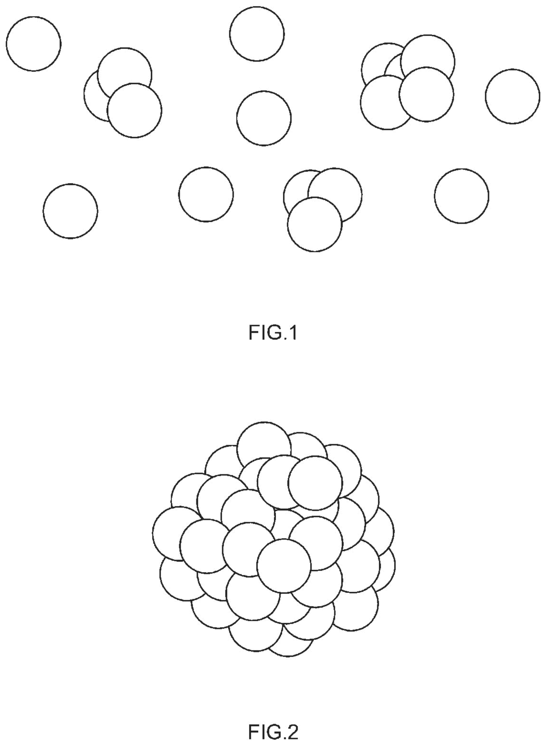

Therefore, the single particles can be schematically shown as illustrated in FIG. 1. FIG. 1 illustrates isolated particles and particles formed by the aggregation of several particles. On the other hand, the secondary particle can be schematically shown as illustrated in FIG. 2. FIG. 2 illustrates one particle formed by the aggregation of a number of primary particles. The secondary particle is typically formed of at least 11 or more primary particles. It should be noted that FIG. 1 and FIG. 2 illustrate the examples, and the first lithium composite oxide particles and the second lithium composite oxide particles used in the present disclosure are not limited to the illustrated ones.

As described above, the single particle is different from a polycrystal particle formed of a plurality of crystal grains, or the secondary particle formed by the aggregation of a number of microparticles (primary particles). In addition, the positive electrode active material in the single particle form can be manufactured in accordance with a known method of obtaining a single-crystal particle.

On the other hand, the second lithium composite oxide particle is in the secondary particle form in which the primary particles are aggregated. Typically, the entire secondary particle (that is, the second lithium composite oxide particle) is filled with the primary particles, and the secondary particle can have an internal void derived from a gap between the primary particles. The second lithium composite oxide particle desirably includes 50 or more primary particles.

Here, in a volume-based particle size distribution of the lithium composite oxide particles obtained in accordance with a laser diffraction/scattering method, the particle diameter at which the cumulative frequency becomes 10% is defined as 10% particle diameter (D10), the particle diameter at which the cumulative frequency becomes 50% is defined as 50% particle diameter (D50), and the particle diameter at which the cumulative frequency becomes 90% is defined as 90% particle diameter (D90). It should be noted that each of D10, D50, and D90 corresponds to the cumulative frequency from the small particle diameter side in the particle size distribution in accordance with the conventional method. The 50% particle diameter (D50) is also called a median diameter.

In the present disclosure, the 50% particle diameter (D50) of the first lithium composite oxide particles is smaller than the 50% particle diameter (D50) of the second lithium composite oxide particles. Therefore, in the present disclosure, the single particles with the small diameter and the secondary particles with the large diameter are used in combination as the positive electrode active material.

The 50% particle diameter (D50) of the first lithium composite oxide particles is not limited in particular as long as being smaller than the 50% particle diameter (D50) of the second lithium composite oxide particles. The 50% particle diameter (D50) of the first lithium composite oxide particles is desirably 2 µm to 6 µm, more desirably 2 µm to 5 µm, and further desirably to 2 µm to 4 µm. The 50% particle diameter (D50) of the second lithium composite oxide particles is not limited in particular as long as being larger than the 50% particle diameter (D50) of the first lithium composite oxide particles. The 50% particle diameter (D50) of the second lithium composite oxide particles is desirably 12 µm to 20 µm, more desirably 13 µm to 19 µm, and still more desirably to 14 µm to 18 µm. When the 50% particle diameter (D50) of the first lithium composite oxide particles and the 50% particle diameter (D50) of the second lithium composite oxide particles are in the aforementioned ranges, the filling property of the positive electrode active material becomes particularly high and the higher volumetric energy density can be achieved.

Here, as described above, the present inventor's examination indicates that, in the case where the single particles with the small diameter and the secondary particles with the large diameter are used in combination as the lithium composite oxide particles employed as the positive electrode active material, many secondary particles are cracked in a process of pressing the positive electrode active material layer with high pressure in order to increase the volumetric energy density. As a result, the specific surface area of the secondary particle increases, resulting in the large moisture absorption of the positive electrode in the storage. In view of this, as a countermeasure, it is considered to increase the breaking strength of the secondary particle with the large diameter so that the secondary particle with the large diameter will not be cracked in the pressing process. In this case, however, the moisture absorption can be suppressed but, on the contrary, the filling property of the positive electrode active material in the positive electrode active material layer decreases, thereby interrupting the increase of the volumetric energy density. Accordingly, it is impossible to achieve both the low moisture absorption property of the positive electrode in the storage and the high volumetric energy density of the secondary battery.

In view of this, in the present disclosure, the particle size distribution width expressed by (D90 - D10)/D50 regarding the first lithium composite oxide particles is 1.20 or less. When the particle size distribution width of the first lithium composite oxide particles is as small as 1.20 or less, the moisture absorption property of the positive electrode including the positive electrode active material according to the present disclosure in the storage can be decreased largely. It is considered that this is because, when the particle size distribution width of the first lithium composite oxide particles is small, the number of particles with the particularly small particle diameter included in the single particle group with the small particle diameter is small; therefore, the filling property of the positive electrode active material is improved, the pressing pressure necessary in increasing the density of the positive electrode active material layer becomes lower, and the excess particle crack of the second lithium composite oxide particles can be suppressed.

In the present disclosure, the particle breaking strength of the second lithium composite oxide particle is 200 MPa or less. In the case where the particle breaking strength of the second lithium composite oxide particle is 200 MPa or less, the second lithium composite oxide particle in the secondary particle form is cracked suitably when the positive electrode active material layer is pressed, thereby improving the filling property in the positive electrode active material layer and improving the volumetric capacity density of the positive electrode. Thus, the volumetric energy density of the secondary battery can be increased.

In this manner, in the case of using the single particles having the small diameter and the narrow particle size distribution width (that is, the first lithium composite oxide particles) and the secondary particles having the large diameter and the low particle breaking strength (that is, the second lithium composite oxide particles) in combination for the positive electrode active material, the moisture absorption reduction effect of the single particles with the small diameter can outweigh the increase in moisture absorption property due to the particle crack of the secondary particles with the large diameter. As a result, the effect of improving the volumetric energy density of the secondary battery due to the particle crack of the secondary particles with the large diameter can be obtained while the moisture absorption of the positive electrode in the storage is suppressed. Thus, by the combination of the first lithium composite oxide particles and the second lithium composite oxide particles according to the present disclosure, the secondary battery can have the high volumetric energy density while enabling the positive electrode to have the low moisture absorption property in the storage.

Here, the moisture absorption in the storage can be suppressed more as the particle size distribution width expressed by (D90 - D10)/D50 of the first lithium composite oxide particles is smaller. Therefore, the particle size distribution width expressed by (D90 - D10)/D50 of the first lithium composite oxide particles is desirably 1.17 or less, more desirably 1.12 or less, and still more desirably 1.10 or less. On the other hand, the particle size distribution width expressed by (D90 - D10)/D50 of the first lithium composite oxide particles is theoretically 1.00 or more, and may be 1.05 or more, 1.08 or more, 1.10 or more, or 1.15 or more.

It should be noted that the 10% particle diameter (D10), the 50% particle diameter (D50), and the 90% particle diameter (D90) of the first lithium composite oxide particles and the 50% particle diameter (D50) of the second lithium composite oxide particles can be measured using a known particle size distribution measurement device in accordance with a laser diffraction/scattering method.

It should be noted that the particle size distribution width of the first lithium composite oxide particles can be controlled by a known method (for example, a method of changing conditions of pulverizing and classifying after the lithium composite oxide particles are manufactured by firing). Specifically, for example, the first lithium composite oxide particles after the firing are roughly pulverized with a roll mill or the like and then pulverized finely with a jet mill or the like; subsequently, a classifying process is performed using a vibration sieve machine, an ultrasonic vibration sieve machine, a cyclone, a micro-separator, or the like. Thus, the particle size distribution can be adjusted.

From the viewpoint of the higher volumetric energy density, the particle breaking strength of the second lithium composite oxide particles is desirably 180 MPa or less, more desirably 150 MPa or less, still more desirably 125 MPa or less, and particularly desirably 120 MPa or less. On the other hand, from the viewpoint of suppressing the excess particle crack, the particle breaking strength of the second lithium composite oxide particles is desirably 50 MPa or more, more desirably 75 MPa or more, and still more desirably 100 MPa or more.

In the present disclosure, the particle breaking strength is the value (MPa) obtained based on the following formula after performing a compression test on one particle. The particle breaking strength of the second lithium composite oxide particles can be measured using a commercial micro-compression tester in accordance with JIS Z 8844:2019. Here, the average of the measurement values about the ten second lithium composite oxide particles is used as the particle breaking strength of the second lithium composite oxide particles.$Cs = 2.48 P / π {d}^{2}$ Cs: particle breaking strength (MPa), P: breaking test force (N), d: particle diameter (mm)

The particle breaking strength of the second lithium composite oxide particles can be adjusted by the manufacturing conditions for the second lithium composite oxide particles. Specifically, for example, the particle breaking strength of the lithium composite oxide particles can be changed by changing the primary particle diameter of a precursor of the lithium composite oxide particles and changing the firing temperature when the precursor and a lithium compound are fired. The firing temperature is related to the crystallinity of the lithium composite oxide particles. When the primary particle diameter of the precursor is adjusted in the range of 40 nm to 80 nm and the firing temperature is adjusted in the range of 800°C to 1000°C, the particle breaking strength of the lithium composite oxide particles is likely to become 120 MPa or less.

In the positive electrode active material according to the present disclosure, a ratio [(003) plane/(104) plane] of the peak intensity of a (003) plane to the peak intensity of a (104) plane at a Miller index hkl, which is obtained by powder X-ray diffraction measurement of the first lithium composite oxide particles using a Cu-Kα ray, is desirably 1.70 or less. Thereby, the resistance of the secondary battery including the positive electrode active material according to the present disclosure can be reduced.

It should be noted that the peak intensity ratio can be obtained in accordance with the known method. Specifically, for example, an X-ray diffraction pattern of the first lithium composite oxide particles is acquired using a commercial X-ray diffraction measurement device. In this X-ray diffraction pattern, the crystal peak appearing at 2θ = 18° to 19° is the peak at the (003) plane at the Miller index hkl and the crystal peak appearing at 2θ = 44° to 45° is the peak at the (104) plane at the Miller index hkl. Therefore, the peak intensity ratio can be calculated using these peak intensities.

It should be noted that the peak intensity ratio [(003) plane/(104) plane] can be adjusted by changing the firing temperature when the lithium composite oxide particles are manufactured by firing a precursor of the lithium composite oxide (specifically, a complex hydroxide including the metal element other than lithium, or the like) and a lithium compound. At this time, as the firing temperature is higher, the peak intensity ratio [(003) plane/(104) plane] tends to be higher. In view of this, when the firing temperature is set to 900°C to 1000°C, the peak intensity ratio tends to become 1.70 or more.

From the viewpoint of the higher volumetric energy density, the content of nickel relative to the total metal elements other than lithium in the lithium nickel cobalt manganese composite oxide is desirably 55 mol% or more in the first lithium composite oxide particle and 50 mol% or more in the second lithium composite oxide particle, and more desirably 60 mol% or more in the first lithium composite oxide particle and 55 mol% or more in the second lithium composite oxide particle.

The mixing ratio between the first lithium composite oxide particles and the second lithium composite oxide particles is not limited in particular. When the mixing amount of the first lithium composite oxide particles is too small, the effect of suppressing the moisture absorption of the positive electrode in the storage tends to be small. In view of this, the mass ratio of the first lithium composite oxide particles to the second lithium composite oxide particles (the first lithium composite oxide particles/the second lithium composite oxide particles) is desirably 20/80 or more, more desirably 30/70 or more, still more desirably 40/60 or more, and the most desirably 45/55 or more. On the other hand, when the mixing amount of the second lithium composite oxide particles is too small, the effect of improving the volumetric charging capacity density tends to be small. In view of this, the mass ratio (the first lithium composite oxide particles/the second lithium composite oxide particles) is desirably 80/20 or less, more desirably 70/30 or less, still more desirably 60/40 or less, and the most desirably 55/45 or less.

The positive electrode active material may consist only of the first lithium composite oxide particles and the second lithium composite oxide particles. In addition to the first lithium composite oxide particles and the second lithium composite oxide particles, the positive electrode active material may include particles functioning as the positive electrode active material other than those particles within the range not interrupting the effect of the present disclosure remarkably (for example, more than 0 mass% and 10 mass% or less, more than 0 mass% and 5 mass% or less, or more than 0 mass% and 1 mass% or less).

In the case of using the positive electrode active material according to this embodiment for the positive electrode, the moisture absorption of the positive electrode in the storage can be reduced. In addition, in the case of manufacturing the secondary battery using this positive electrode, the secondary battery with the high volumetric energy density can be obtained. In particular, the moisture absorption suppression of the positive electrode in the storage and the high volumetric energy density can be obtained more effectively when the positive electrode has the higher density. Moreover, by the positive electrode active material according to the present disclosure, using the first lithium composite oxide in the single particle form enables the secondary battery to have the excellent cycle characteristic (in particular, the excellent capacity deterioration resistance when the charging and discharging are repeated). The positive electrode active material according to the present disclosure is typically the positive electrode active material for the secondary battery, and is desirably the positive electrode active material for the lithium ion secondary battery.

In another aspect, the positive electrode according to the present disclosure includes a positive electrode current collector, and a positive electrode active material layer supported on the positive electrode current collector. The positive electrode active material layer includes the aforementioned positive electrode active material according to the present disclosure.

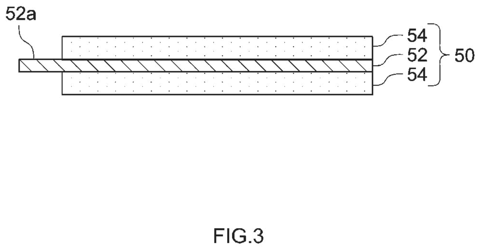

The positive electrode according to the present disclosure will be described below based on the embodiment in which the positive electrode is used for the lithium ion secondary battery; however, the positive electrode according to the present disclosure is not limited to the embodiment to be described below. FIG. 3 is a schematic cross-sectional view of the positive electrode according to this embodiment taken along a thickness direction and a width direction.

As illustrated in the drawing, a positive electrode 50 includes a positive electrode current collector 52 and a positive electrode active material layer 54 supported by the positive electrode current collector 52. In the illustrated example, the positive electrode active material layer 54 is provided on both surfaces of the positive electrode current collector 52. However, the positive electrode active material layer 54 may be provided on one surface of the positive electrode current collector 52. The positive electrode active material layer 54 is desirably provided on both surfaces of the positive electrode current collector 52.

As the positive electrode current collector 52, a known positive electrode current collector used for a lithium ion secondary battery may be used and examples thereof include a sheet or a foil made of a metal with excellent electrical conductivity (for example, aluminum, nickel, titanium, stainless steel, or the like). The positive electrode current collector 52 is desirably an aluminum foil.

The size of the positive electrode current collector 52 is not limited in particular and may be determined as appropriate in accordance with the battery design. In the case of using the aluminum foil as the positive electrode current collector 52, the thickness is not limited in particular and is, for example, 5 µm or more and 35 µm or less and desirably 7 µm or more and 20 µm or less.

The positive electrode active material layer 54 contains a positive electrode active material. In this embodiment, the aforementioned positive electrode active material according to the present disclosure is used as the positive electrode active material. The positive electrode active material layer 54 may include another positive electrode active material in addition to the aforementioned positive electrode active material according to the present disclosure within the range not interrupting the effect of the present disclosure.

The positive electrode active material layer 54 may include a component other than the positive electrode active material, such as trilithium phosphate, a conductive material, or a binder. Desired examples of the conductive material include carbon black such as acetylene black (AB) and other carbon materials (for example, carbon nanotube or the like). As the binder, for example, polyvinylidene fluoride (PVDF) or the like can be used.

The content of the positive electrode active material in the positive electrode active material layer 54 (that is, the content of the positive electrode active material to the entire mass of the positive electrode active material layer 54) is not limited in particular and is desirably 70 mass% or more, more desirably 80 mass% or more and 99 mass% or less, and still more desirably 85 mass% or more and 98 mass% or less. The content of the conductive material in the positive electrode active material layer 54 is not limited in particular and is desirably 0.5 mass% or more and 15 mass% or less and more desirably 1 mass% or more and 10 mass% or less. The content of the binder in the positive electrode active material layer 54 is not limited in particular and is desirably 0.5 mass% or more and 15 mass% or less and more desirably 0.8 mass% or more and 10 mass% or less.

The thickness of the positive electrode active material layer 54 is not limited in particular and is, for example, 10 µm or more and 300 µm or less and desirably 20 µm or more and 200 µm or less.

The density of the positive electrode active material layer 54 is not limited in particular. As the density of the positive electrode active material layer 54 is higher, the pressure in the pressing process for increasing the density of the positive electrode active material layer 54 increases. As a result, the second lithium composite oxide particles are likely to crack, and thus the moisture absorption property of the positive electrode 50 is tend to be high. Accordingly, as the density of the positive electrode active material layer 54 is higher, the effect of suppressing the moisture absorption of the positive electrode in the storage becomes more remarkable. From the viewpoint of achieving both the volumetric energy density and the moisture absorption suppression in the storage at a higher level, the density of the positive electrode active material layer 54 is desirably 3.00 g/cm³ to 4.00 g/cm³, more desirably 3.20 g/cm³ to 4.00 g/cm³, still more desirably 3.40 g/cm³ to 3.80 g/cm³, and particularly desirably 3.50 g/cm³ to 3.60 g/cm³.

As illustrated in the drawing, a positive electrode active material layer non-formation part 52a where the positive electrode active material layer 54 is not provided may be provided at one end part of the positive electrode 50 in the width direction. In the positive electrode active material layer non-formation part 52a, the positive electrode current collector 52 is exposed and the positive electrode active material layer non-formation part 52a can function as a current collecting part. However, a structure for collecting current from the positive electrode 50 is not limited to this structure.

In the positive electrode active material layer non-formation part 52a of the positive electrode sheet 50, a protection layer with an insulating property (not illustrated) that includes an insulating particle may be provided at a position adjacent to the positive electrode active material layer 54. This protection layer can prevent short-circuit between the positive electrode active material layer non-formation part 52a and a negative electrode active material layer 64.

The positive electrode 50 according to this embodiment can be manufactured in accordance with the known method. For example, the positive electrode 50 can be manufactured by preparing a positive electrode active material layer formation paste including the positive electrode active material, a solvent (dispersion medium), and if necessary a binder, a conductive material, or the like, applying the paste on the positive electrode current collector 52, drying the paste, and then pressing the resultant.

The positive electrode 50 according to this embodiment has the low moisture absorption property in the storage and enables the secondary battery to have the high volumetric energy density. In addition, the positive electrode 50 according to this embodiment enables the secondary battery to have the high cycle characteristic. The positive electrode 50 according to this embodiment is typically the positive electrode of the secondary battery and is desirably the positive electrode of the lithium ion secondary battery. The positive electrode 50 according to this embodiment can also be used as a positive electrode of an all-solid secondary battery.

In another aspect, the secondary battery disclosed herein includes a positive electrode, a negative electrode, and an electrolyte. This positive electrode is the aforementioned positive electrode according to the present disclosure.

The secondary battery according to the present disclosure will be described below in detail based on the embodiment in which a flat square lithium ion secondary battery includes a flat wound electrode body and a flat battery case. The secondary battery according to the present disclosure, however, is not limited to the embodiment to be described below.

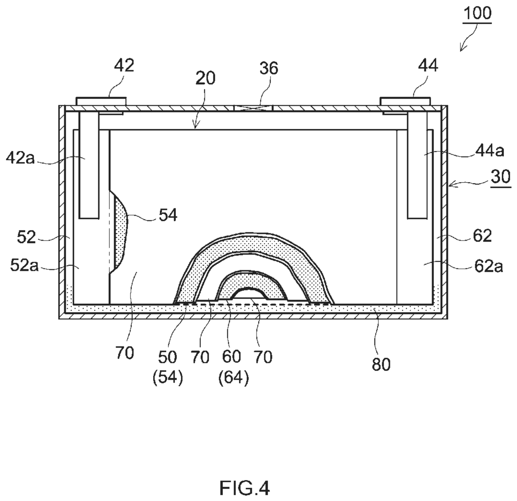

A lithium ion secondary battery 100 illustrated in FIG. 4 is a sealed battery constructed in such a way that a wound electrode body 20 with a flat shape and a nonaqueous electrolyte 80 are accommodated inside a battery case (that is, exterior container) 30 with a flat square shape. A battery case 30 includes a positive electrode terminal 42 and a negative electrode terminal 44 for external connection, and a thin safety valve 36 that is set to, when the internal pressure of the battery case 30 has risen to or above a predetermined level, release the internal pressure. The positive and negative electrode terminals 42 and 44 are electrically connected to positive and negative electrode current collecting plates 42a and 44a, respectively. As a material of the battery case 30, a metal material with small weight and high thermal conductivity, such as aluminum, is used, for example. It should be noted that a current interrupt device (CID) may be installed between the positive electrode terminal 42 and the positive electrode current collecting plate 42a or between the negative electrode terminal 44 and the negative electrode current collecting plate 44a.

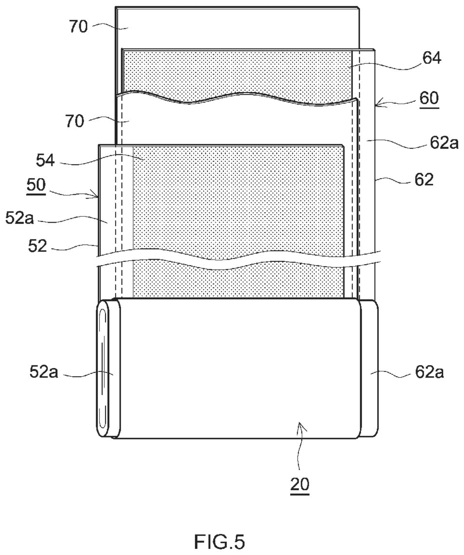

As illustrated in FIG. 4 and FIG. 5, the wound electrode body 20 is in a form in which the positive electrode sheet 50 and a negative electrode sheet 60 are overlapped on each other through two rectangular separator sheets 70 and wound in a longitudinal direction. The positive electrode sheet 50 has a structure in which the positive electrode active material layer 54 is formed along the longitudinal direction on one surface or both surfaces (here, both surfaces) of the positive electrode current collector 52 in an elongated shape. The negative electrode sheet 60 has a structure in which the negative electrode active material layer 64 is formed along the longitudinal direction on one surface or both surfaces (here, both surfaces) of a negative electrode current collector 62 in an elongated shape.

The positive electrode active material layer non-formation part 52a (that is, a part where the positive electrode active material layer 54 is not formed and the positive electrode current collector 52 is exposed) and a negative electrode active material layer non-formation part 62a (that is, a part where the negative electrode active material layer 64 is not formed and the negative electrode current collector 62 is exposed) are formed so as to protrude outward from opposite ends of the wound electrode body 20 in a winding axis direction (that is, a sheet width direction that is orthogonal to the longitudinal direction). Each of the positive electrode active material layer non-formation part 52a and the negative electrode active material layer non-formation part 62a functions as the current collecting part. The positive electrode active material layer non-formation part 52a and the negative electrode active material layer non-formation part 62a are joined to the positive electrode current collecting plate 42a and the negative electrode current collecting plate 44a, respectively. It should be noted that the shape of the positive electrode active material layer non-formation part 52a and the negative electrode active material layer non-formation part 62a is not limited to the shape illustrated in the drawing. Each of the positive electrode active material layer non-formation part 52a and the negative electrode active material layer non-formation part 62a may be formed as a current collecting tab that is processed into a predetermined shape.

As the positive electrode sheet 50, the aforementioned positive electrode 50 according to the embodiment is used. In the positive electrode sheet 50 in this structure example, the positive electrode active material layer 54 is formed on both surfaces of the positive electrode current collector 52.

As the negative electrode current collector 62, a known negative electrode current collector used for a lithium ion secondary battery may be used and examples thereof include a sheet or a foil made of a metal with excellent electrical conductivity (for example, copper, nickel, titanium, stainless steel, or the like). The negative electrode current collector 62 is desirably a copper foil.

The size of the negative electrode current collector 62 is not limited in particular and may be determined as appropriate in accordance with the battery design. In the case of using the copper foil as the negative electrode current collector 62, the thickness is not limited in particular and is, for example, 5 µm or more and 35 µm or less and desirably 7 µm or more and 20 µm or less.

The negative electrode active material layer 64 contains a negative electrode active material. As the negative electrode active material, for example, a carbon material such as graphite, hard carbon, or soft carbon can be used. Graphite may be either natural graphite or artificial graphite, and may be amorphous carbon-coated graphite in which graphite is covered with an amorphous carbon material.

The average particle diameter (median diameter: D50) of the negative electrode active material is not limited in particular and is, for example, 0.1 µm or more and 50 µm or less, desirably 1 µm or more and 25 µm or less, and more desirably 5 µm or more and 20 µm or less. It should be noted that the average particle diameter (D50) of the negative electrode active material can be determined by, for example, a laser diffraction scattering method.

The negative electrode active material layer 64 can contain a component other than the active material, for example a binder, a thickener, or the like. Examples of the binder include styrene butadiene rubber (SBR), polyvinylidene fluoride (PVDF), and the like. Examples of the thickener include carboxymethyl cellulose (CMC) and the like.

The content of the negative electrode active material in the negative electrode active material layer 64 is desirably 90 mass% or more and more desirably 95 mass% or more and 99 mass% or less. The content of the binder in the negative electrode active material layer 64 is desirably 0.1 mass% or more and 8 mass% or less, and more desirably 0.5 mass% or more and 3 mass% or less. The content of the thickener in the negative electrode active material layer 64 is desirably 0.3 mass% or more and 3 mass% or less, and more desirably 0.5 mass% or more and 2 mass% or less.

The thickness of the negative electrode active material layer 64 is not limited in particular and is, for example, 10 µm or more and 300 µm or less and desirably 20 µm or more and 200 µm or less.

Examples of the separator 70 include a porous sheet (film) formed of resin such as polyethylene (PE), polypropylene (PP), polyester, cellulose, or polyamide. Such a porous sheet may have a single-layer structure or a multilayer structure of two or more layers (for example, three-layer structure in which a PP layer is stacked on each surface of a PE layer). The separator 70 may have a heat-resistant layer (HRL) on a surface thereof.

The nonaqueous electrolyte 80 typically contains a nonaqueous solvent and a supporting salt (electrolyte salt). As the nonaqueous solvent, various organic solvents used for the electrolyte solution of the general lithium ion secondary batteries, such as carbonates, ethers, esters, nitriles, sulfones, and lactones, can be used without particular limitations. Specific examples include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), trifluorodimethyl carbonate (TFDMC), methyl acetate, methyl propionate, and the like. As the nonaqueous solvent described above, one kind can be used alone or two or more kinds thereof can be used in combination as appropriate.

Desired examples of the supporting salt include lithium salts such as LiPF₆, LiBF₄, and lithium bis(fluorosulfonyl)imide (LiFSI) (desirably, LiPF₆). The concentration of the supporting salt is desirably 0.7 mol/L or more and 1.3 mol/L or less.

The nonaqueous electrolyte 80 may include a component other than the aforementioned components unless the effect of the present disclosure is deteriorated remarkably. Examples of such a component include a film forming agent such as vinylene carbonate (VC) or an oxalato complex, a gas generating agent such as biphenyl (BP) or cyclohexyl benzene (CHB), a thickener, and various other additives.

In the lithium ion secondary battery 100 with the aforementioned structure, the moisture absorption of the included positive electrode in the storage after the manufacture is suppressed. In addition, the lithium ion secondary battery 100 has the high volumetric energy density. Furthermore, the lithium ion secondary battery 100 has the high cycle characteristic (in particular, the capacity deterioration resistance when the charging and discharging are repeated). The lithium ion secondary battery 100 can be used for various applications. Specific applications include a portable power source for a personal computer, a mobile electronic appliance, a mobile terminal, or the like; a power source for driving a vehicle such as a battery electric vehicle (BEV), a hybrid electric vehicle (HEV), or a plug-in hybrid electric vehicle (PHEV); a storage battery of a small electrical energy storage device, and the like, and in particular, the power source for driving a vehicle is desirable. The lithium ion secondary battery 100 can be used in a mode of a battery module, in which a plurality of batteries are typically connected to each other in series and/or in parallel.

It should be noted that the lithium ion secondary battery 100 with the square shape including the wound electrode body 20 with the flat shape has been described as one example. However, the secondary battery according to the present disclosure may be configured as a lithium ion secondary battery including a stacked-type electrode body (that is, an electrode body in which a plurality of positive electrodes and a plurality of negative electrodes are stacked alternately). The stacked-type electrode body may include a plurality of separators so that one separator is held between the positive electrode and the negative electrode, or the positive electrodes and the negative electrodes may be alternately stacked with one separator folded in a zigzag manner.

The secondary battery according to the present disclosure can be configured as a coin type lithium ion secondary battery, a button type lithium ion secondary battery, a cylindrical lithium ion secondary battery, or a laminate case type lithium ion secondary battery. The secondary battery according to the present disclosure can also be configured as a nonaqueous electrolyte secondary battery other than the lithium ion secondary battery in accordance with the known method.

On the other hand, an all-solid secondary battery (in particular, all-solid lithium ion secondary battery) can be constructed using the positive electrode 50 according to the embodiment described above by using a solid electrolyte instead of the nonaqueous electrolyte 80 in accordance with the known method.

Examples related to the present disclosure are hereinafter described but these examples are not intended to limit the present disclosure to such Examples.

### <Example 1>

As the first lithium composite oxide particles, LiNi_{0.6}Co_{0.2}Mn_{0.2}O₂ in the single particle form was prepared. The 10% particle diameter (D10), the 50% particle diameter (D50), and the 90% particle diameter (D90) of the first lithium composite oxide particles that were measured by a method to be described below were 2.5 µm, 4.0 µm, and 6.8 µm, respectively. In addition, the peak intensity ratio of the (003) plane to the (104) plane that was obtained by the powder X-ray diffraction measurement in the method to be described below was 1.72.

As the second lithium composite oxide particles, LiNi_{0.55}Co_{0.20}Mn_{0.25}O₂ in the secondary particle form was prepared. The 10% particle diameter (D10), the 50% particle diameter (D50), and the 90% particle diameter (D90) of the second lithium composite oxide particles that were measured by the method to be described below were 12.2 µm, 15.7 µm, and 20.1 µm, respectively. In addition, the particle breaking strength of the second lithium composite oxide particles obtained by the method to be described below was 120 MPa.

The first lithium composite oxide particles and the second lithium composite oxide particles were mixed at a mass ratio of 50:50; thus, the positive electrode active material was prepared. This positive electrode active material, carbon black as the conductive material, and polyvinylidene fluoride (PVDF) as the binder were mixed at a mass ratio of positive electrode active material:AB:PVDF = 97.5:1.5:1.0, and a suitable amount of N-methyl-2-pyrrolidone (NMP) was added to the obtained mixture; thus, a positive electrode active material layer formation slurry was prepared.

The positive electrode active material layer formation slurry was applied on both surfaces of the positive electrode current collector made of an aluminum foil and dried; thus, the positive electrode active material layer was formed. With a roller, the positive electrode active material layer was roll-pressed so that the positive electrode active material layer had a density within a range of 3.50 g/cm³ to 3.60 g/cm³. This was cut into a predetermined size and then, an aluminum tab was attached; thus, the positive electrode sheet was manufactured.

In addition, graphite (C) as the negative electrode active material, styrene butadiene rubber (SBR) as the binder, and carboxymethyl cellulose (CMC) as the thickener were mixed at a mass ratio of C:SBR:CMC = 98:1:1 in an ion exchanged water; thus, a negative electrode active material layer formation slurry was prepared. This negative electrode active material layer formation slurry was applied on a copper foil and dried; thus, the negative electrode active material layer was formed. The negative electrode active material layer was roll-pressed with the roller so as to have a predetermined thickness. This was cut into a predetermined size and then, a nickel tab was attached; thus, the negative electrode sheet was manufactured.

As the separator, a porous polyolefin sheet was prepared. The positive electrode sheet and the negative electrode sheet were overlapped on each other so that the separator was held therebetween; thus, the stacked-type electrode body was manufactured.

The stacked-type electrode body was inserted to the battery case formed of an aluminum laminate sheet and then, the nonaqueous electrolyte was injected thereto. The nonaqueous electrolyte was obtained in such a way that LiPF₆ as the supporting salt was dissolved at a concentration of 1 mol/L in a mixed solvent containing ethylene carbonate (EC) and ethyl methyl carbonate (EMC) in a volume ratio of EC:EMC = 30:70 and vinylene carbonate was added thereto by 0.3 mass%. After that, the battery case was sealed and thus, an evaluation lithium ion secondary battery according to Example 1 was obtained.

### <Examples 2 to 4 and Comparative Examples 1 to 6>

The positive electrode active materials, the positive electrodes, and the evaluation lithium ion secondary batteries were manufactured by a method similar to that in Example 1 except that the lithium composite oxide in the single particle form having the cumulative particle diameter and the peak intensity ratio of the (003) plane to the (104) plane shown in Table 1 was used as the first lithium composite oxide particles and that the lithium composite oxide in the secondary particle form having the cumulative particle diameter and the particle breaking strength shown in Table 1 was used as the second lithium composite oxide particles. The particle size distribution width of the first lithium composite oxide particles and the second lithium composite oxide particles was changed by changing the conditions of pulverizing and classifying at the manufacture of these lithium composite oxide particles. The peak intensity ratio of the (003) plane to the (104) plane was changed by changing the firing temperature at the manufacture of the first lithium composite oxide particles. The breaking strength of the second lithium composite oxide particles was changed by changing the manufacturing conditions for the second lithium composite oxide particles.

### <Particle size distribution measurement of first and second lithium composite oxide particles>

The volume-based particle size distribution of the first and second lithium composite oxide particles was measured using the commercial laser diffraction/scattering particle size distribution measurement device ("Mastersizer-3000" manufactured by Malvern Panalytical). The particle diameters corresponding to the cumulative frequencies 10 vol%, 50 vol%, and 90 vol% from the microparticle side with the small particle diameter were obtained as the 10% particle diameter (D10), the 50% particle diameter (D50), and the 90% particle diameter (D90), respectively. In addition, the value of (D90 - D10)/D50 was calculated as the particle size distribution width of the first lithium composite oxide particles.

### <Powder X-ray diffraction measurement>

The powder X-ray diffraction measurement of the first lithium composite oxide particles was performed using a commercial automated multipurpose X-ray diffractometer ("SmartLab" manufactured by Rigaku). In this measurement, a dedicated holderwas filled with a powder sample of the first lithium composite oxide particles, and the X-ray diffraction pattern was acquired by a reflection method with a tube voltage of 45 kV and a tube current of 200 mA using the Cu-Kα ray. In this X-ray diffraction pattern, the crystal peak appearing at 20 = 18° to 19° is the peak at the (003) plane at the Miller index hkl and the crystal peak appearing at 2θ = 44° to 45° is the peak at the (104) plane at the Miller index hkl. The ratio of the peak intensity of the (003) plane to the peak intensity of the (104) plane was obtained using the software included in the device.

### <Measurement of particle breaking strength>

The particle breaking strength (MPa) of the second lithium composite oxide particles was obtained using the commercial micro-compression tester ("MCT-510" manufactured by Shimadzu Corporation). Specifically, a very small amount of the second lithium composite oxide particles was dispersed on a pressurizing plate of the micro-compression tester, and one of those particles was subjected to the compression test; thus, the particle breaking strength (MPa) was obtained based on the following formula. This measurement was performed on ten particles, and the average value was used as the particle breaking strength (MPa) of the second lithium composite oxide particles.$Cs = 2.48 P / π {d}^{2}$ Cs: particle breaking strength (MPa), P: breaking test force (N), d: particle diameter (mm)

### <Evaluation of moisture absorption property of positive electrode>

The positive electrode manufactured as above was stored for 14 days in a thermo-hygrostat chamber with the temperature set to 25°C and the humidity set to 10%. The amount of moisture (ppm) of the positive electrode after the storage was measured in accordance with a Karl-Fisher method using a commercial moisture meter (a moisture meter "CA310, coulometric titration method, CA mode" and a moisture vaporizer "VA-300" manufactured by Nittoseiko Analytech Co., Ltd.). The results are shown in Table 1.

### <Measurement of output resistance>

As the initial charging, in a 25°C environment, each evaluation lithium ion secondary battery was charged with a constant current at a current density of 0.2 mA/cm² up to 4.25 V and then charged with a constant voltage at a voltage of 4.25 V until the current density became 0.04 mA/cm². After a 10-minute rest, each evaluation lithium ion secondary battery was discharged with a constant current at a current density of 0.2 mA/cm² up to 3.0 V. The discharging capacity at this time was obtained and this was used as an SOC of 100%.

After each evaluation lithium ion secondary battery was charged until an SOC of 50%, the DC resistance (Ω) was measured. The results are shown in Table 1. It should be noted that the output characteristic is higher as the value of this DC resistance is smaller.

### <Measurement of volumetric charging capacity density>

As the initial charging, in the 25°C environment, each evaluation lithium ion secondary battery was charged with a constant current at a current density of 0.2 mA/cm² up to 4.25 V and then charged with a constant voltage at a voltage of 4.25 V until the current density became 0.04 mA/cm². The charging capacity at this time was obtained.

The first lithium composite oxide particles and the second lithium composite oxide particles were mixed at a mass ratio of 50:50 and molded into a sample with a cylindrical shape of Φ 19 mm, and the sample was pressed for 30 seconds with a load of 70 kN. The density of the mixture after the pressing was measured. By multiplying this density by the aforementioned charging capacity, the volumetric charging capacity density (mAh/cm³) was calculated. It can be said that the volumetric energy density is higher as this volumetric charging capacity density is higher. The results are shown in Table 1.

### [Table 1]

**Table 1**

| | First lithium complex oxide particles | | | | | Second lithium complex oxide particles | | | |
|---|---|---|---|---|---|---|---|---|---|
| | Cumulative particle diameter (*µ*m) | | | (D90-D10) /D50 | (003)/(104) peak intensity ratio | Cumulative particle diameter (*µ*m) | | | Particle breaking strength (MPa) |
| | D10 | D50 | D90 | | | D10 | D50 | D90 | |
| Example 1 | 2.5 | 4.0 | 6.8 | 1.08 | 1.72 | 12.2 | 15.7 | 20.1 | 120 |
| Example 2 | 2.4 | 4.2 | 7.3 | 1.17 | 1.72 | 12.2 | 15.7 | 20.1 | 120 |
| Example 3 | 2.3 | 4.1 | 7.2 | 1.20 | 1.70 | 12.2 | 15.7 | 20.1 | 120 |
| Example 4 | 2.3 | 4.1 | 7.2 | 1.20 | 1.51 | 12.2 | 15.7 | 20.1 | 120 |
| Comp. Example 1 | 2.1 | 4.2 | 7.9 | 1.36 | 1.48 | 12.2 | 15.7 | 20.1 | 120 |
| Comp. Example 2 | 1.9 | 4.2 | 8.5 | 1.59 | 1.50 | 12.2 | 15.7 | 20.1 | 120 |
| Comp. Example 3 | 2.3 | 4.1 | 7.2 | 1.20 | 1.51 | 11.8 | 14.8 | 19.6 | 284 |
| Comp. Example 4 | 2.3 | 4.1 | 7.2 | 1.20 | 1.51 | 12.2 | 15.2 | 19.6 | 301 |
| Comp. Example 5 | 2.3 | 4.1 | 7.2 | 1.20 | 1.70 | 12.2 | 15.2 | 19.6 | 301 |
| Comp. Example 6 | 2.2 | 4.0 | 7.8 | 1.40 | 1.74 | 12.2 | 15.7 | 20.1 | 120 |

**Table 1**

| | Amount of moisture absorption after storage (ppm) | Output resistance (Ω) | Volumetric charging capacity density (mAh/cm³) |
|---|---|---|---|
| Example 1 | 250 | 0.078 | 700 |
| Example 2 | 294 | 0.078 | 703 |
| Example 3 | 300 | 0.075 | 704 |
| Example 4 | 302 | 0.085 | 703 |
| Comp. Example 1 | 468 | 0.076 | 700 |
| Comp. Example 2 | 501 | 0.078 | 705 |
| Comp. Example 3 | 368 | 0.082 | 664 |
| Comp. Example 4 | 320 | 0.084 | 642 |
| Comp. Example 5 | 280 | 0.080 | 644 |
| Comp. Example 6 | 460 | 0.076 | 704 |

The results in Table 1 show that, in the case of using the single particles with the small particle diameter (that is, the first lithium composite oxide) and the secondary particles with the large particle diameter (that is, the second lithium composite oxide) in combination, the amount of moisture absorption after the storage becomes smaller as the particle size distribution width of the first lithium composite oxide is smaller. It can be understood that as the particle breaking strength of the second lithium composite oxide becomes lower, the volumetric charging capacity density becomes higher and the amount of moisture absorption increases.

In addition, it can be understood that in the case where the particle size distribution width of the first lithium composite oxide is 1.20 or less and the particle breaking strength of the second lithium composite oxide particles is 200 MPa or less, both the small amount of moisture absorption of the positive electrode after the storage and the high volumetric charging capacity density can be achieved. Accordingly, it is indicated that, by the positive electrode active material according to the present disclosure, the amount of moisture absorption of the positive electrode in the storage can be reduced and the secondary battery can have the high volumetric energy density.

In addition, it can be understood that when the ratio of the peak intensity of the (003) plane to the peak intensity of the (104) plane is 1.70 or less, the internal resistance of the battery can be reduced.

The specific examples of the present disclosure have been described above in detail; however, these are examples and will not limit the scope of claims. The techniques described in the scope of claims include those in which the specific examples exemplified above are variously modified and changed.

That is to say, the positive electrode active material, the positive electrode, and the secondary battery disclosed herein are the following Items [1] to [10].
[1] The positive electrode active material including: the first lithium composite oxide particles in the single particle form; and the second lithium composite oxide particles in the secondary particle form, in which in the volume-based particle size distribution obtained in accordance with the laser diffraction/scattering method, when the particle diameter at which the cumulative frequency becomes 10% is defined as the 10% particle diameter (D10), the particle diameter at which the cumulative frequency becomes 50% is defined as the 50% particle diameter (D50), and the particle diameter at which the cumulative frequency becomes 90% is defined as the 90% particle diameter (D90), the 50% particle diameter (D50) of the first lithium composite oxide particles is smaller than the 50% particle diameter (D50) of the second lithium composite oxide particles and the particle size distribution width expressed by (D90 - D10)/D50 of the first lithium composite oxide particles is 1.20 or less, and the particle breaking strength of the second lithium composite oxide particles is 200 MPa or less.
[2] The positive electrode active material according to Item [1], in which the ratio of the peak intensity of the (003) plane to the peak intensity of the (104) plane at the Miller index hkl, which is obtained by the powder X-ray diffraction measurement of the first lithium composite oxide particles using the Cu-K *α* ray, is 1.70 or less.
[3] The positive electrode active material according to Item [1] or [2], in which the 50% particle diameter of the first lithium composite oxide particles is 2 µm to 6 µm and the 50% particle diameter of the second lithium composite oxide particles is 12 µm to 20 µm.
[4] The positive electrode active material according to any one of Items [1] to [3], in which the mass ratio of the first lithium composite oxide particles to the second lithium composite oxide particles is 40/60 to 60/40.
[5] The positive electrode active material according to any one of Items [1] to [4], in which each of the first lithium composite oxide particles and the second lithium composite oxide particles is the particle of the lithium nickel cobalt manganese composite oxide.
[6] The positive electrode active material according to Item [5], in which the content of nickel relative to the total metal elements other than lithium in the lithium nickel cobalt manganese composite oxide is 50 mol% or more.
[7] The positive electrode active material according to any one of Items [1] to [6], in which the particle breaking strength of the second lithium composite oxide particles is 125 MPa or less.
[8] The positive electrode including: the positive electrode current collector; and the positive electrode active material layer supported on the positive electrode current collector, in which the positive electrode active material layer includes the positive electrode active material according to any one of Items [1] to [7].
[9] The positive electrode according to Item [8], in which the positive electrode active material layer has a density of 3.50 g/cm³ to 3.60 g/cm³.
[10] The secondary battery including: the positive electrode; the negative electrode; and the electrolyte, in which the positive electrode is the positive electrode according to Item [8] or [9].

## Claims

1. A positive electrode active material comprising:
first lithium composite oxide particles in a single particle form; and
second lithium composite oxide particles in a secondary particle form, wherein
in a volume-based particle size distribution obtained in accordance with a laser diffraction/scattering method, when a particle diameter at which a cumulative frequency becomes 10% is defined as 10% particle diameter (D10), a particle diameter at which the cumulative frequency becomes 50% is defined as 50% particle diameter (D50), and a particle diameter at which the cumulative frequency becomes 90% is defined as 90% particle diameter (D90), the 50% particle diameter (D50) of the first lithium composite oxide particles is smaller than the 50% particle diameter (D50) of the second lithium composite oxide particles and a particle size distribution width expressed by (D90 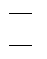 D10)/D50 of the first lithium composite oxide particles is 1.20 or less, and
a particle breaking strength of the second lithium composite oxide particles is 200 MPa or less.

2. The positive electrode active material according to claim 1, wherein a ratio of a peak intensity of a (003) plane to a peak intensity of a (104) plane at a Miller index hkl, which is obtained by powder X-ray diffraction measurement of the first lithium composite oxide particles using a Cu-K 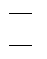 ray, is 1.70 or less.

3. The positive electrode active material according to claim 1, wherein the 50% particle diameter (D50) of the first lithium composite oxide particles is 2 □m to 6 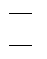 m and the 50% particle diameter (D50) of the second lithium composite oxide particles is 12 □m to 20 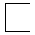 m.

4. The positive electrode active material according to claim 1, wherein a mass ratio of the first lithium composite oxide particles to the second lithium composite oxide particles is 40/60 to 60/40.

5. The positive electrode active material according to claim 1, wherein each of the first lithium composite oxide particles and the second lithium composite oxide particles is a particle of a lithium nickel cobalt manganese composite oxide.

6. The positive electrode active material according to claim 5, wherein a content of nickel relative to total metal elements other than lithium in the lithium nickel cobalt manganese composite oxide is 50 mol% or more.

7. The positive electrode active material according to claim 1, wherein the particle breaking strength of the second lithium composite oxide particles is 125 MPa or less.

8. A positive electrode (50) comprising:
a positive electrode current collector (52); and
a positive electrode active material layer (54) supported on the positive electrode current collector (52), wherein the positive electrode active material layer (54) includes the positive electrode active material according to claim 1.

9. The positive electrode (50) according to claim 8, wherein the positive electrode active material layer (54) has a density of 3.50 g/cm3 to 3.60 g/cm3.

10. A secondary battery (100) comprising:
a positive electrode (50);
a negative electrode (60); and
an electrolyte (80), wherein the positive electrode (50) is the positive electrode (50) according to claim 8.
